# EUROPEAN PATENT APPLICATION

(11) **EP 3 884 756 A1**
(43) Date of publication of application: **29.09.2021**
(21) Application number: 21164824.1
(22) Date of filing: 25.03.2021
(51) Int. Cl.: A01D 34/00, A01D 34/68, B60B 11/00

(54) **AUTOMATIC ROBOTIC LAWN MOWER**

(30) Priority: 27.03.2020 IT 202000006541
(71) Applicant: Vires S.r.l., 33170 Pordenone (IT)
(72) Inventor: BOMBEN, Giuseppe, 33170 Pordenone (IT); FABBRI, Marco, 35043 Monselice (PD) (IT); PECILE, Gian Luca, 33074 Fontanafredda (PN) (IT)
(74) Representative: Frare, Paolo

(57) **Abstract**

The present invention concerns an automatic robotic lawn mower (1) comprising:
• a frame (2) to which movement means suitable for allowing the autonomous movement of said automatic robotic lawn mower (1) on a grassy surface (E) are associated;
• at least a cutting module (6) configured for coming into contact and cutting the grass of said grassy surface (E) on which said automatic robotic lawn mower (1) is positioned,
• the movement means comprising a traction mechanism including, with respect to the motion direction of the robotic lawn mower (1), a set of right (3) and left (4) traction wheels, each one positioned at a side of the frame (2) of the robotic lawn mower (1).

The right (3) and left (4) traction wheels comprise each at least a first wheel (31,41) fitted on a rotary motion transmitting shaft (51, 61) receiving the rotation from the movement means, and at least a second wheel (32,42) bound to said at least a first wheel (31,41) by elastic constraints means suitable for transmitting the rotation from the at least one first wheel (31,41) to the at least a second wheel (32,42).

## Description

The present invention refers to an automatic robotic lawn mower. Typically known robotic lawn mowers comprise a support frame provided with wheels, generally driven by an electric motor powered by rechargeable batteries.

The frame also supports one or more cutting modules comprising one or more rotating discs, generally made of plastic or metal, which are rotated, typically by an electric motor (the same that drives the wheels, or a dedicated one), around an axis perpendicular or slightly inclined (for example by 1 or 2 degrees) with respect to the direction perpendicular to the plane of support of the wheels.

Some known robots also have a mechanism (automatic or manual) that regulates the height of the disc from the ground, generally with an excursion of a few tens of millimetres, in order to be able to regulate the cutting height, for example depending on the season and/or the level of irrigation.

Known automatic robotic lawn mowers are also provided with an electronic control device configured in such a way as to autonomously control the operations of the robotic lawn mower, which can therefore move autonomously on a grassy surface and cut the grass with no need for human intervention.

The quality of the traction, which allows the lawn mower to move on normally rough and uneven ground, is an extremely important requirement, especially for a robotic lawn mower whose motion is not controlled by an operator. To ensure optimum cutting quality, the robotic lawn mower should work in the best possible grip under all possible conditions.

In fact, when the robot encounters obstacles along its path, such as irregularities in the turf, small stones, trunks, shrubs, holes, puddles, branches, foliage and above all an extremely muddy ground or anything else that can stick to the wheels, if the characteristics of the robot's traction set allow it to overcome obstacles, the lawn mower can complete its work without unexpectedly getting stuck. Furthermore, even if the lawn mower does not get stuck, even a bad motion (i.e. irregular, hopping, jerky, etc.) can affect the cutting quality.

However, even for an operator-driven type lawn mower, traction quality is an equally important requirement.

In the known art, in order to improve the movement of the robot on the ground, various solutions have been adopted which provide for example an increase in the number of traction wheels, an increase in the diameter and/or width of the wheels, a greater softness of the tire, or to provide the robot with tires with very marked blocks and/or with metal elements that can penetrate into the ground (for muddy surfaces).

However, these known solutions have not proved to be completely satisfactory for ensuring an optimal quality of traction, and consequently of the movement and cutting of the lawn mower, in particular in the presence of very rough and uneven ground.

The present invention therefore poses itself the main task of overcoming the aforementioned drawbacks by making a lawn mower provided with a traction group that guarantees regular movement of the robot, which allows obtaining a satisfactory cutting quality.

This task is achieved by realising an automatic robotic lawn mower according to claim 1.

Further characteristics of the invention are highlighted by the dependent claims, which are an integral part of the present description.

The features and advantages of the robotic lawn mower will be more apparent from the following description, which is to be understood as exemplifying and not limiting, with reference to the appended schematic drawings, wherein:

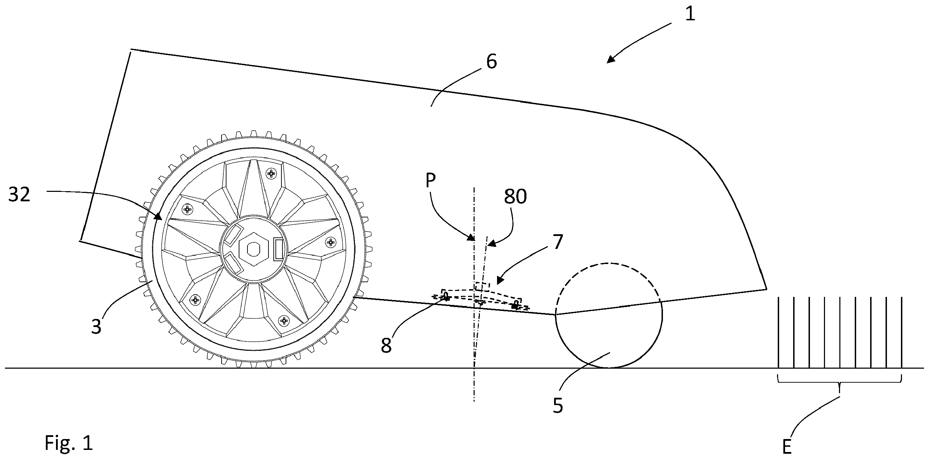

Figure 1 is a schematic side view of an automatic robotic lawn mower according to the present invention, with some internal components highlighted in dashed lines;

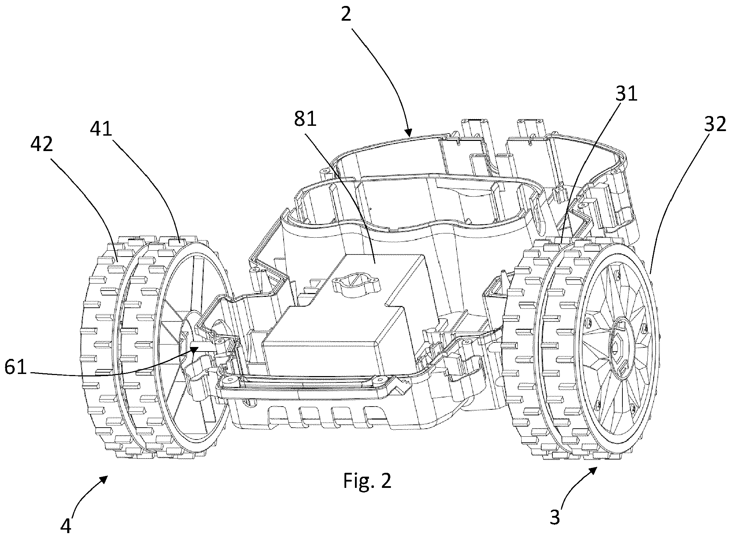

Figure 2 is a schematic view of the automatic robotic lawn mower of Figure 1 without the protective casing;

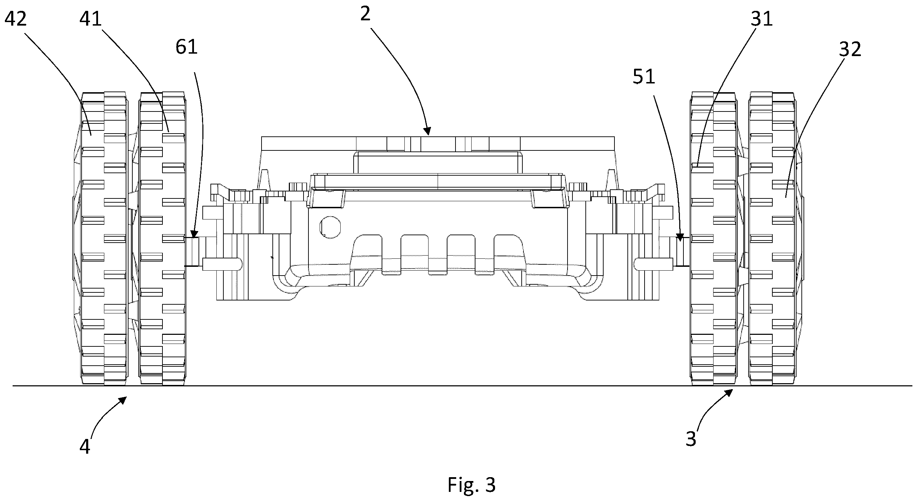

Figure 3 is a rear view of the automatic robotic lawn mower according to the present invention in the rest condition;
Figure 4 is a rear view of the automatic robotic lawn mower according to the present invention positioned on uneven ground;

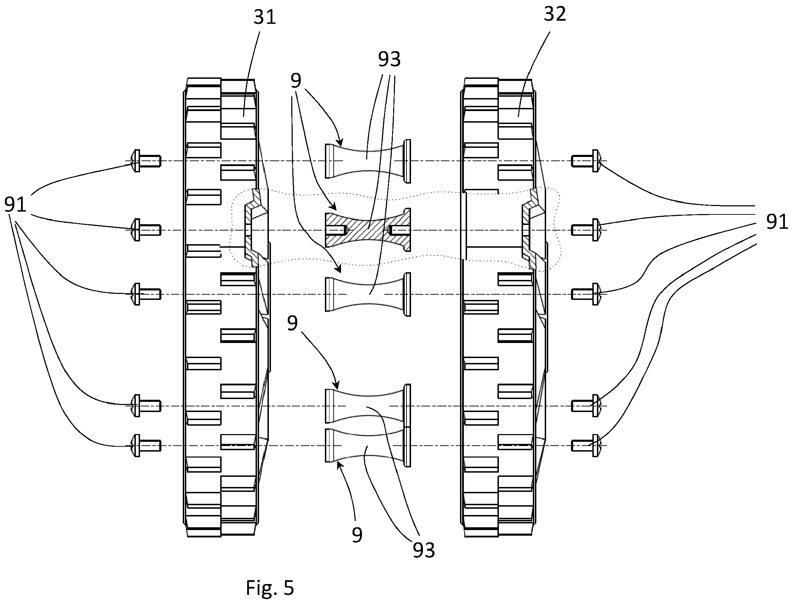

Figure 5 shows an exploded rear view of a right set of drive wheels of the automatic robotic lawn mower according to the present invention;

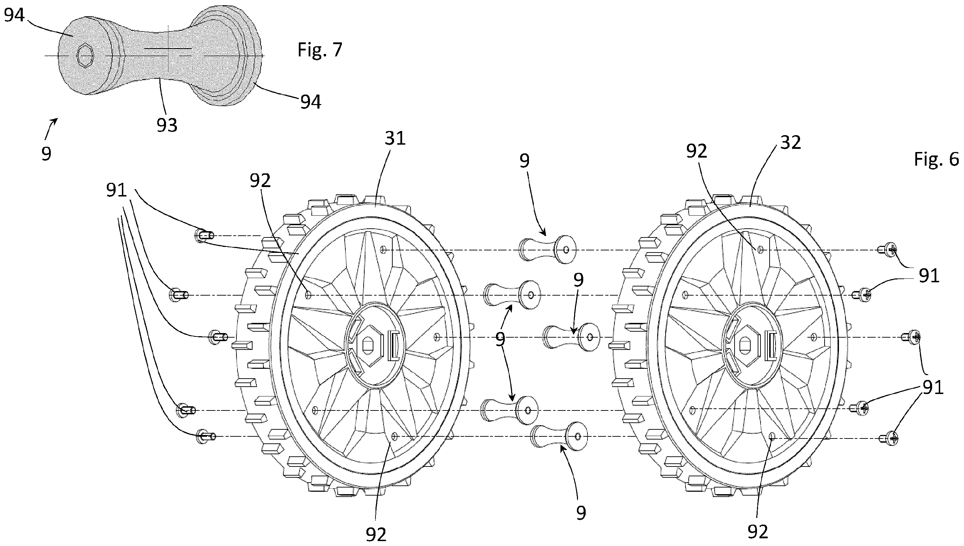

Figure 6 shows an exploded perspective view of a right set of drive wheels of the automatic robotic lawn mower according to the present invention;
Figure 7 shows an example of elastic constraint means between the two wheels according to the present invention.

With reference to the aforementioned figures, the automatic robotic lawn mower 1 (hereinafter also referred to simply as a robotic lawn mower, or robot, or lawn mower) according to the present invention comprises a frame 2, to which movement means suitable for allowing the autonomous displacement of the automatic robotic lawn mower 1 on a grassy surface E, such as a lawn, are associated.

Advantageously, these movement means comprise a traction mechanism including, with respect to the motion direction of the robot 1, a set of right 3 and left 4 traction wheels, each one positioned at a side of the frame 2 of said robot, preferably in the rear area thereof. The movement means preferably also comprise two front wheels (usually non-drive ones) 5, generally having a smaller diameter than the drive ones, which can preferably rotate around an axis perpendicular to their axis of rotation, so as to allow the robot to turn. Other configurations and/or numbers of wheels are however possible. Advantageously, the movement means can comprise one or more electric motors for transmitting the rotation, not shown, configured to rotate the (left and right) sets of drive wheels.

Advantageously, but not necessarily, these one or more electric motors are configured to move the robot at a speed comprised between 100 and 450 millimetres per second, more preferably 150 millimetres per second.

Advantageously, the movement means can comprise an electronic control unit, not shown, for example an electronic control board, configured in such a way as to autonomously control the operations of the robot 1, which can therefore move autonomously on a grassy surface E and cut the grass thereof without requiring human intervention.

Advantageously, the robot 1 comprises an electrical power supply system, not shown, such as for example one or more batteries, preferably of the rechargeable type, suitable for powering the movement means, and any electrical or electronic devices present in the robot 1.

Advantageously, but not necessarily, the robot 1 comprises a protective casing 6, for example a plastic shell such as for example polycarbonate or ABS, which encloses the various components of the robot at the top, and which is advantageously at least partially open at the bottom.

The robot comprises at least a cutting module 7, associated with said frame 2 and configured for coming into contact and cutting the grass of the grassy surface E, on which the automatic robotic lawn mower is positioned.

The cutting module 7 preferably comprises a rotating support 8 to which one or more, free, blades are preferably hinged, configured for protruding radially from the rotating support during its rotation.

Preferably, but not necessarily, the rotating support is disc-shaped. Advantageously, but not necessarily, in the condition in which all the one or more first blades protrude radially from the rotating support, they define a maximum diametrical volume of the respective cutting module comprised between 150 and 300 millimetres, preferably 170 millimetres.

In order to reduce the friction between the rotating support 8 and the grass, it has a central concavity on one of its faces facing the grassy surface in use; the concavity also reduces the occurrence of mechanical resonance phenomena, which would generate noise.

In a further advantageous embodiment, not shown, the rotating support 8 can be, for example, a radial structure protruding from a central hub, at the ends of whose spokes the blades are hinged.

Preferably, the rotating support 8 is configured in such a way as to rotate with respect to an axis of rotation 80 which is inclined, in use, with respect to the perpendicular P to the grassy surface E on which the robot rests; this arrangement ensures a reduced contact of the rotating support 8 with the cut grass that remains in the grassy surface after cutting, thus reducing the friction with this grass, which would hinder the rotation of the rotating support 8.

Advantageously, the robot 1 comprises means for rotating the rotating support 8, such as for example an electric motor, schematically represented with a block 81, which can be, for example, an electric motor dedicated to the rotation of the rotating support 8, or the same electric motor used to rotate the wheels, possibly coupled to the rotating support 8 and to the wheels by means of suitable mechanical coupling means, not shown.

Advantageously, but not necessarily, the electric motor is configured for rotating the rotating support 8 at a speed comprised between 1000 and 3000 revolutions per minute, preferably 2500 revolutions per minute.

According to an aspect of the present invention, the sets of right 3 and left 4 wheels each comprise at least a first wheel 31 or 41 fitted on a respective rotary motion transmitting shaft 51, 61, (associated with the aforementioned electric motor(s) for transmitting the rotation), and at least a second wheel 32 or 42 bound to the first wheel by elastic constraint means suitable for transmitting the rotation from the first wheel to the second wheel.

Preferably, the at least a first wheel 31 or 41 is arranged internally to the at least a second wheel 32 or 42 with respect to the frame 2 of the robotic lawn mower 1. In a further advantageous embodiment variant, not shown, the at least a first wheel 31 or 41 (i.e. the one fitted on the respective shaft 51, 61) is arranged externally to the at least a second wheel 32 or 42 with respect to the frame 2 of the robotic lawn mower 1.

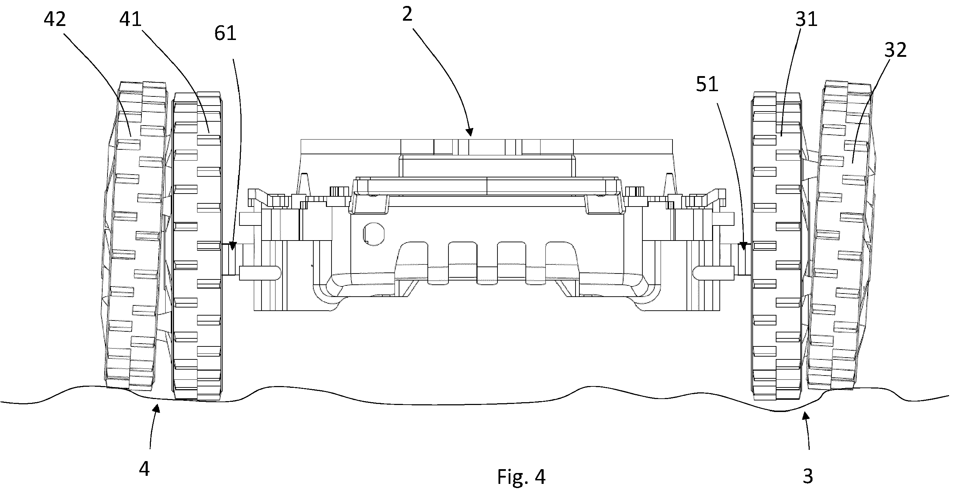

The elastic constraint means allow the second wheel to be positioned substantially facing the first one, but to be able to "offset" itself slightly with respect to the axis of rotation of the first wheel, and also allow it to modify its inclination with respect to the first one, while maintaining substantially the same rotation speed. In this way, in the presence of uneven ground or obstacles, as shown in Figure 4, the second wheels can be inclined with respect to the first ones and with a different axis of rotation. This facilitates overcoming obstacles and allows the lawn mower to work in a position with better grip to the ground, in all possible conditions thereof.

The elastic coupling between the two types of wheels leads to an effect comparable to a wheel with increased width with a very soft tire.

Furthermore, the elastic coupling allows the additional wheel to adapt to the different conformations of the ground and to get more easily rid of the mud that could accumulate due to the relative movement between the elastically coupled wheels.

Advantageously, the elastic constraint means are made, totally or partially, of rubber; it is emphasized that the term "rubber" is the generic name of products (also called *elastomers*) characterized by high elasticity and deformability; they can be of natural origin, when derived from the coagulation of the latex of some plants (in this case we speak of natural rubber or rubber), and artificial (synthetic rubber), when obtained by hot or cold polymerization of olefinic hydrocarbons and derivatives thereof in the presence of catalysts.

An elastomer is essentially a polymer in a rubbery state in which there are bonds, weak or strong, which strengthen its structure, enhancing the mechanical performance thereof, the most peculiar of which is the ability to undergo large elastic deformations; in particular, elastomers can be stretched several times (for example from 1 to 10 times their length) if subjected to mechanical stress (for example traction or bending), recovering their size once a rest situation has been resumed. Advantageously, the elastomer, or elastomers, of which the elastic constraint means are made, totally or partially, have a hardness on the "Shore A" scale comprised between Shore20A and Shore70A.

In an advantageous variant embodiment, such as that shown in the attached figures, the first (31, 41) and second (32, 42) wheels have the same diameter and the same width.

In an advantageous variant embodiment, such as the one shown in the attached figures, the first (31, 41) and second (32, 42) wheels have the same tread shape.

In a further advantageous embodiment variant, not shown in the attached figures, the first (31, 41) and second (32, 42) wheels have the same diameter, but a width and/or a conformation of the tread different from one another, so as to provide a different grip on the ground and/or traction.

In the shown embodiment, the elastic constraint means between the at least one first wheel and the at least a second wheel advantageously comprise a plurality of elastic elements 9, preferably with an elongated shape, that interpose between the two facing wheels (respectively 31, 32 and 41, 42) and that act as spacers between them.

They are preferably positioned along a circumference that is concentric to the related wheel.

Advantageously, the elastic elements 9 interposed between the two facing wheels are evenly spaced among them.

In the shown case, the elastic elements 9 are advantageously positioned and fixed to their opposite ends by suitable fastening means 91 (for example screws), to the wheel rims; preferably, but not necessarily, the wheel rims comprise spokes 92, and the fastening means 91 are fixed to these spokes 92.

These elastic elements 9 are preferably substantially cylindrical, and more preferably, but not necessarily, have an intermediate or central portion 93 tapered compared to the opposite ends, so as to give greater elasticity.

These elastic elements 9 can preferably be made of rubber, or other elastic material, advantageously provided with elements that allow them to be fixed to the wheels.

Optionally, the elastic elements 9 may have flanges or discs 94 at their ends, made of a more rigid material than the body of the elastic element 9 as a whole, to facilitate a better fastening to the wheel.

In a further variant embodiment, not shown in the attached figures, the elastic elements 9 can have the ends which can be fixed to the wheels suitably shaped so as to be able to fit into suitable seats or holes, not shown, obtained in the same wheels, preferably in the rims thereof; for example these ends can be shaped like an arrowhead, a mushroom, etc. so that they can be pressed into a seat or hole obtained in the wheel, and then remain bound in this seat or hole.

In a further advantageous embodiment variant, not shown, the elastic elements 9 can be obtained integrally with one of the two wheels, for example with the rim thereof, and be configured to be fixed with their free end to the other wheel, preferably to the rim thereof.

Alternatively, the elastic constraint means between the first and second wheels advantageously comprise an elastic annular support, for example a single elastic ring that is concentric to the wheels, not shown, which interposes and connects the two wheels facing each other (31, 32 and 41, 42 respectively); for example, this elastic ring can be fixed to the rims of the two wheels.

The automatic robotic lawn mower 1 according to the present invention is susceptible in any case to numerous modifications and variations, all of which are within the same inventive concept; moreover, all the details can be replaced by technically equivalent elements. The materials used, as well as the shapes and dimensions, may in practice be of any type according to the technical requirements.

## Claims

1. Automatic robotic lawn mower (1) comprising:
• a frame (2) to which movement means suitable for allowing the autonomous movement of said automatic robotic lawn mower (1) on a grassy surface (E) are associated;
• at least a cutting module (6) configured for coming into contact and cutting the grass of said grassy surface (E) on which said automatic robotic lawn mower (1) is positioned,
• said movement means comprising a traction mechanism including, with respect to the motion direction of said robotic lawn mower (1), a set of right (3) and left (4) traction wheels, each one positioned at a side of said frame (2) of said robotic lawn mower (1),
**characterised in that**
said right (3) and left (4) traction wheels comprise each at least a first wheel (31,41) fitted on a rotary motion transmitting shaft (51, 61) receiving the rotation from said movement means, and at least a second wheel (32,42) bound to said at least a first wheel (31,41) by elastic constraints means suitable for transmitting the rotation from said at least one first wheel (31,41) to said at least a second wheel (32,42).

2. Automatic robotic lawn mower (1) according to claim 1, wherein with respect to said frame (2) of said automatic robotic lawn mower (1), said at least a first wheel (31,41) is arranged internally to said at least a second wheel (32,42).

3. Automatic robotic lawn mower (1), according to claim 1 or 2, wherein said constraints means of said at least a first wheel (31,41) and said at least a second wheel (32,42) comprise a plurality of elastic elements (9) that interpose between the two facing wheels and that act as spacers between them.

4. Automatic robotic lawn mower (1), according to claim 3, wherein said elastic elements (9) have an intermediate portion (93) tapered compared to the opposite ends.

5. Automatic robotic lawn mower (1), according to claim 3 or 4, wherein said elastic elements (9) are positioned along a circumference that is concentric to the related said first wheel (31,41) and second wheel (32,42).

6. Automatic robotic lawn mower (1), according to claim 3 or 4 or 5, wherein said elastic elements (9), interposed between said facing wheels, are evenly spaced among them.

7. Automatic robotic lawn mower (1), according to claim 3 or 4 or 5 or 6, wherein said elastic elements (9) are fixed, to their opposite ends, by fastening means (91), to the rims of said first (31,41) and second (32,42) wheel.

8. Automatic robotic lawn mower, according to claim 7, wherein said elastic elements (9) have at their ends, discs (94) made of a more rigid material than the body of said elastic elements (9) as a whole, to facilitate a better fastening to the respective said first (31,41) and second wheel (32,42).

9. Automatic robotic lawn mower (1), according to claim 1, wherein, said means of elastic constraints between said first (31,41) and second wheels (32,42) comprise an elastic annular support that interposes and connects one said first wheel (31,41) and one said second wheel (32,43) facing each other.

10. Automatic robotic lawn mower (1), according to one or more of claims 3 to 9, wherein said elastic elements (9) are made of rubber, or other elastic material.

11. Automatic robotic lawn mower (1), according to one or more of the preceding claims, wherein said elastic constraints means are totally or partially made of rubber.

12. Traction mechanism for an automatic robotic lawn mower (1) comprising a right (3) and a left (4) set of drive wheels with respect to the motion direction of said automatic robotic lawn mower (1), positioned at opposite sides of a frame (2) of said automatic robotic lawn mower (1),
**characterised in that**
said sets of right (3) and left (4) wheels each comprise at least a first wheel (31,41) fitted on a respective rotary motion transmitting shaft receiving the rotation from movement means of said automatic robotic lawn mower (1) and at least a second wheel (32,42) bound to said at least a first wheel (31,41) by elastic constraint means suitable for transmitting the rotation from said at least a first wheel (31,41) to said at least a second wheel (32,42).

13. Traction mechanism, as in claim 12, wherein said elastic constraint means are made totally or partially of rubber.

14. Traction mechanism, as in claim 12 or 13, wherein said constraints means of said at least a first wheel (31,41) and said at least a second wheel (32,42) comprise a plurality of elastic elements (9) that interpose between the two facing wheels and that act as spacers between them.

15. Traction mechanism, as in claim 14, wherein said elastic elements (9) are made of rubber, or other elastic material.
